# EUROPEAN PATENT SPECIFICATION

(11) **EP 0 434 636 B1**
(45) Date of publication and mention of the grant of the patent: **29.03.1995**
(21) Application number: 90830540.2
(22) Date of filing: 20.11.1990
(51) Int. Cl.: B60N 2/32

(54) **A rear seat for motor vehicles, particularly motor cars**
Rücksitz für Kraftfahrzeuge, insbesondere für Kraftwagen
Siège arrière pour véhicules automobiles, en particulier pour voitures

(30) Priority: 20.12.1989 IT 6814289
(43) Date of publication of application: 26.06.1991
(73) Proprietor: FIAT AUTO S.p.A., 10135 Torino (IT)
(72) Inventor: Acuto, Giovanni, I-10043 Orbassano (Torino) (IT); Vitale, Carlo, I-10042 Nichelino (Torino) (IT)
(74) Representative: Bosotti, Luciano

(56) References cited:
- EP-A- 0 022 691
- DE-A- 3 828 659
- FR-A- 2 449 552
- US-A- 2 465 770
- US-A- 3 449 012
- US-A- 3 973 799
- US-A- 4 422 690

## Description

The present invention relates to motor vehicle seats and is particularly concerned with a seat for use as the rear seat in the passenger compartment or cab of a motor vehicle such as, for example, a motor car.

According to a conventional solution, the rear seat of a motor vehicle generally has a simpler structure than the front seats, particularly as regards the possibilities for its adjustment which are few if any for rear seats.

In most cases, and particularly in family cars, the backrest of the rear seat can be tilted forwards (lowered) so as to extend the luggage compartment situated in the rear part of the motor vehicle. Often, in order to tilt the backrest, the squab must first be raised to an approximately vertical position behind the backrests of the front seats.

In principle, of course, the adjustment solutions used for the front seats could be reproduced for the rear seat.

Apart from obvious considerations of cost, this selection is difficult to put in practice since the rear seat must usually have a bench configuration (possibly with its backrest split into two parts) in order to be able to accommodate three passengers.

It is known from US-A-3 449 012 or EP-A-0 022 691 a rear seat comprising a squab and a backrest, including a common support structure for the squab and the backrest, wherein the structure is intended to be mounted on the floor of the passenger compartment of the motor vehicle so as to be movable selectively backwards and forwards relative to the floor of the vehicle.

The object of the present invention, therefore, is to provide a rear seat structure for motor vehicles which satisfies the need to provide effective adjustment of the seat as well as the requirements of production and use.

According to the present invention, this object is achieved by virtue of a rear seat for motor vehicles having the characteristics recited in claim 1. Further features of the invention are given in greater detail in the claims which follow.

One particular aspect of the present invention relates to a device for connecting the squab and the backrest of the seat which, because it is compact and easy to use, lends itself particularly for use in a rear seat for motor vehicles, even in a central position thereof.

The invention will now be described, purely by way of non-limiting example, with reference to the appended drawings, in which:
Figures 1 to 3 show three possible positions of use of a seat according to the invention,
Figure 4 is a general, exploded perspective view of a seat according to the invention, and
Figures 5 to 7 show the structure and characteristics of some of the elements visible in the preceding drawings, also in three different possible operating positions.

In the drawings, a motor vehicle seat is generally indicated 1; more specifically, in the embodiment illustrated, this is the rear seat for the passenger compartment of a motor car (not shown as a whole).

The seat 1 is composed essentially of a padded seat structure 2 (in short a "squab") with a front region 4 and a rear region 5, and a backrest 6 which, in the normal condition of use, projects upwardly from the rear region 5 of the squab 4.

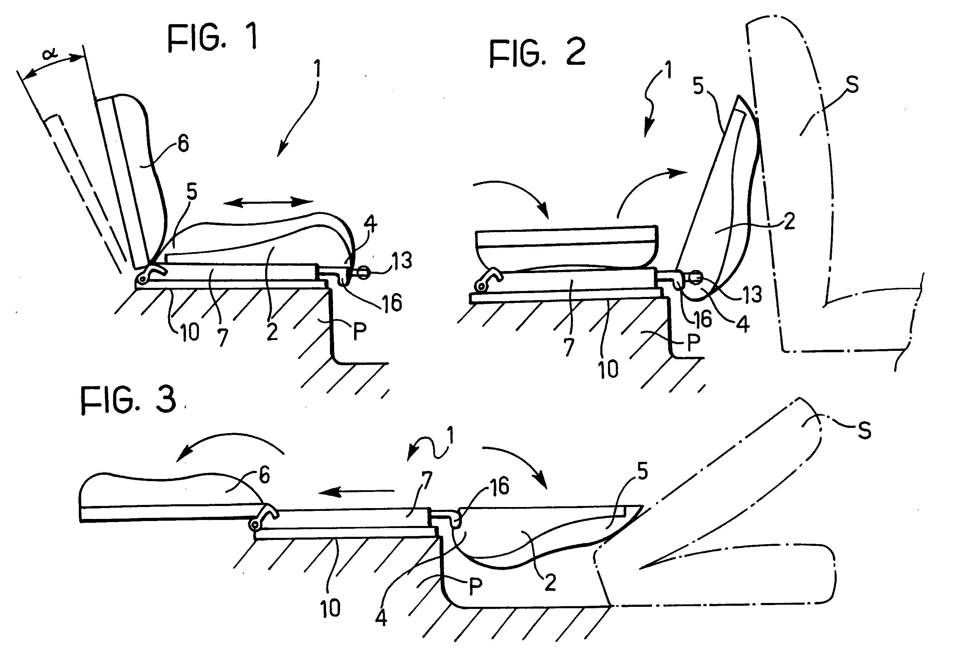

Naturally, the terms "front", "rear", "upper", "lower", etc., as used in the present description and in the claims which follow relate to the conditions of normal use of the seat (Figure 1) and the normal direction of advance of the vehicle in which it is mounted.

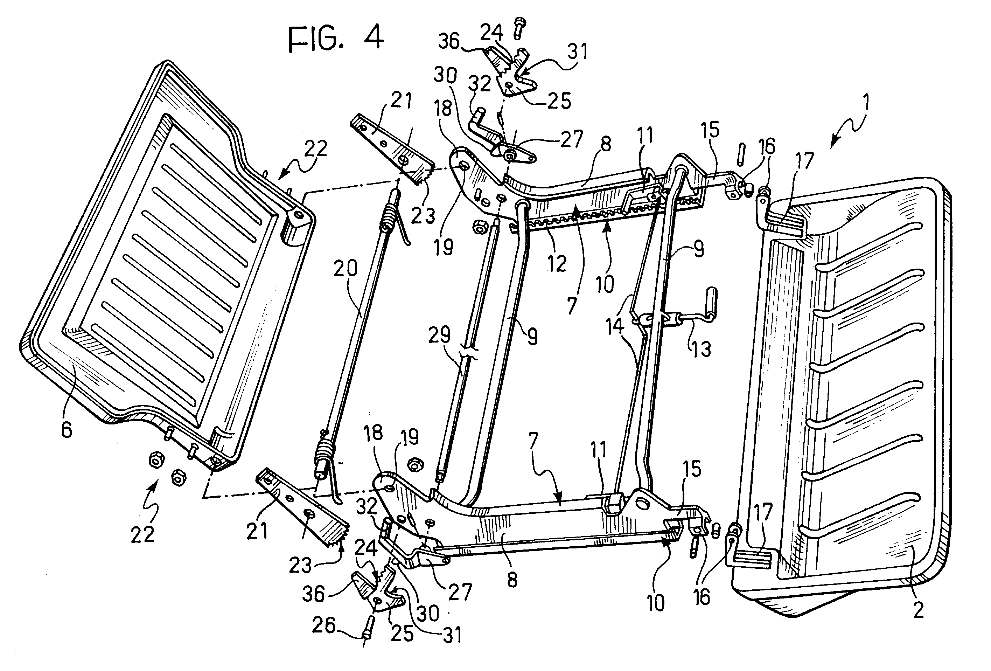

The main characteristic of the seat according to the invention is the fact that both the squab 2 and the backrest 6 (of which only the supporting structures or "bodies" are shown in Figure 4) are hinged to a support structure or frame 7 which is generally rectangular in shape.

In particular, in the embodiment illustrated, the support structure 7 is composed essentially of two lateral elements or sides 8 (which define-with reference to the direction of advance of the motor vehicle-the longitudinal sides of the frame 7) connected by two cross members 9 of generally tubular structure.

The sides 8 are mounted for sliding in respective channel-shaped guides 10 which are fixed (for example, by means of bolts) to the floor P of the rear part of the passenger compartment.

Respective lock or catch units 11 are mounted on the sides 8 for cooperating with respective teeth 12 of the guides 10 (only those associated with the guide 10 situated on the left-hand side of the seat 1 are visible in Figure 4) so as to lock the frame 7 (and hence the seat 1 as a whole) in a selectively predetermined position of longitudinal adjustment.

The units 11 may be formed in accordance with any of the solutions currently used in the art for performing the function of locking the front seats of motor vehicles against their longitudinal adjustment movement. In particular, the units 11 may be brought selectively to a position in which they are disengaged from the teeth 12 (so as to enable the structure or frame 7, and hence the seat 1, to slide freely backwards and forwards relative to the vehicle) by the operation of a lever 13 which projects from the front edge of the squab 1 in an approximately central position so that it can easily be gripped by the passengers occupying the seat 1. The lever 13 acts on the locking units 11 through respective transmission rods 14.

When the lever 13 is released, resilient biassing means (not shown specifically in the drawings) associated with the units 11 automatically return the latter to the locked position so as to secure the structure 7, and hence the seat 1, in the position of longitudinal adjustment reached at the time in question.

An appendage 15 projects from the front end of each of the sides 8 and carries one of the parts of a hinge unit 16 whose other part is constituted by a lever or bracket 17 fixed to the structure or body of the squab 2.

The two hinge units 16 together define a horizontal axis which is situated approximately in correspondence with the front edge of the seat 1 and about which the squab 2 can be pivoted forwardly to an approximately vertical position in which it rests against the backrests of the front seats S (pivoting through approximately 90°) or even to a horizontal position in which it is pivoted fully forwards and the "rear" region 5 of the squab 2 actually bears against the bases of the front seat S (pivoting through approximately 180°).

In order to facilitate this full forward pivoting, the frame 7 may be slid backwards along the guides 10 so as to increase the space available.

Two further appendages, indicated 18, project upwardly from the rear ends of the sides 8.

Each further appendage 18 has an aperture 19 for housing a shaft or rod 20 on whose opposite ends, which are aligned horizontally transverse the direction of advance of the vehicle, two plates 21 are rotatably mounted. These plates in turn are intended to be fixed to the body of the backrest 6 by means of bolts 22.

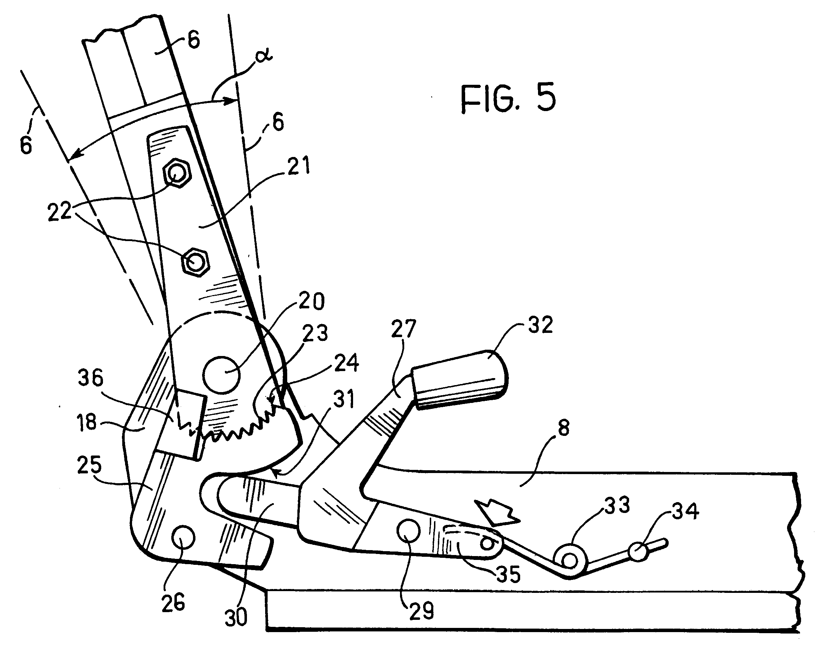

The lower end of each plate 21 (still with reference to the position of normal use of the backrest, shown in Figures 1 and 5) has a first toothed sector 23 which extends along a circumferential arc concentric with the shaft or rod 20 in order to cooperate with a complementary (second) toothed sector 24 provided on a movable device 25 mounted on the respective side 8 and pivotable about a first horizontal pin 26. The latter is situated in a position generally below and slightly to the rear of the shaft or rod 20.

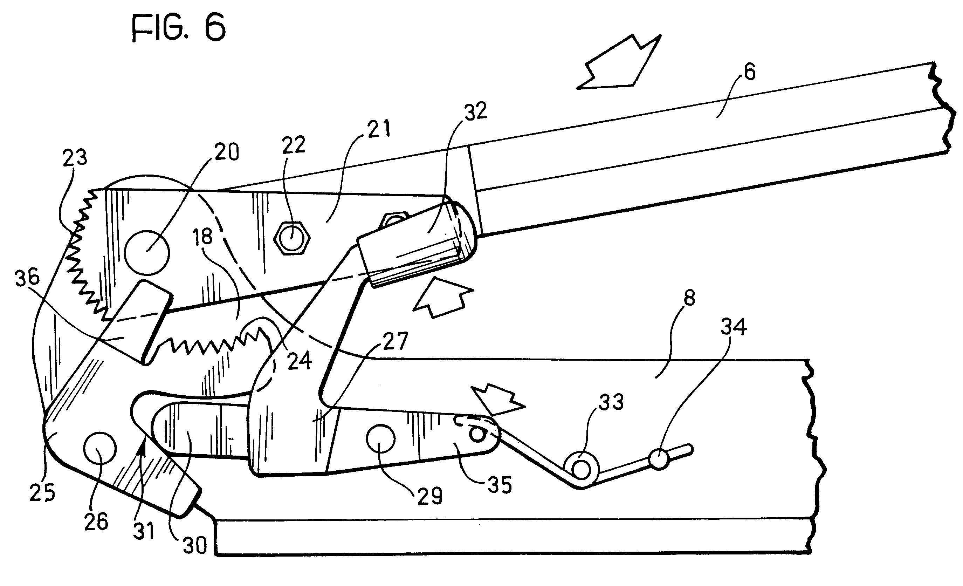

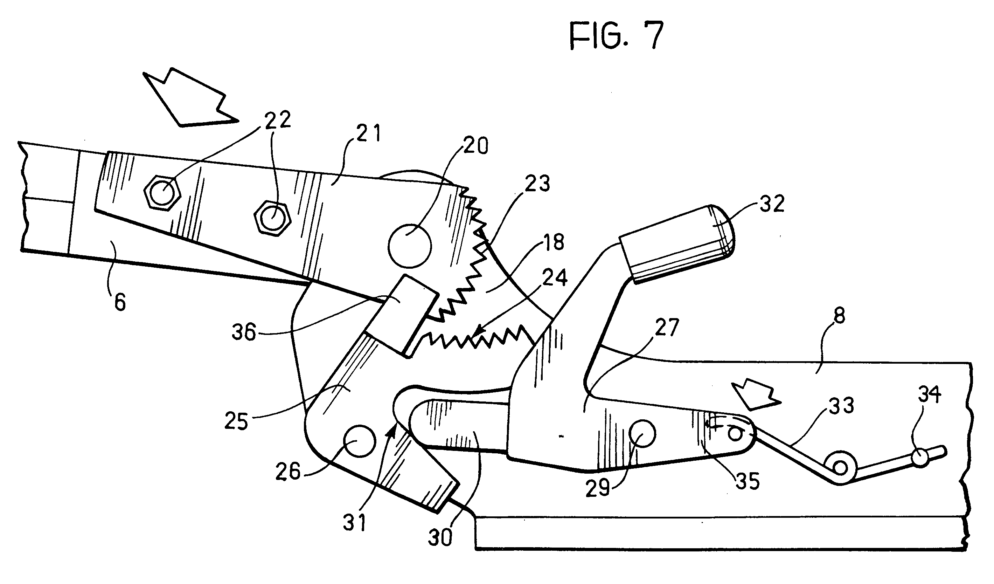

In general, the movable device 25 can pivot between a raised position (shown in Figure 5) in which the toothed sectors 23, 24 are meshed to lock the backrest 6 relative to the sides 8, and a lowered position (Figures 6 and 7) in which the second toothed sector 24 is released from the first toothed sector 23 to leave the backrest free to pivot relative to the sides 8.

The backrest 6 can thus be pivoted relative to the squab structure 2 so as to be tilted (lowered) forwardly (Figures 2 and 6) or backwardly (Figures 3 and 7) so as to cover an angular range of pivoting of substantially 180°.

In the first case (Figures 2 and 6), and particularly when the squab 2 has already been pivoted to the vertical position, a first condition of use is achieved in which the rear luggage compartment is greatly extended.

In the second case, after the squab 2 has been pivoted forwards to the horizontal position, a further forward extension of the luggage compartment can be achieved.

In positions intermediate the aforementioned end positions in which it is tilted fully forwards or backwards, fine adjustments of the backrest 6 can of course be made, as shown schematically in broken outline in Figures 1 and 5. The amplitude of the angular range of the fine adjustment is obviously defined by the angular extent of each toothed sector 23, 24. For example, this angular extent can be selected so as to enable fine adjustment through about 18°.

The pivoting of the movable device 25 about the first pin 26 between the raised or locked position of Figure 5 and the lowered, disengaged or released position of Figures 6 and 7 is effected by further movable devices 27 also mounted on the sides 8 and pivotable about respective second horizontal pins 29.

In general, each movable device 27 (one on each side of the seat 1) is mounted in a position in front of the movable device 25 and has a rear finger 30. In practice, this acts as a cam for insertion in a corresponding profiled recess or notch 31 in the front edge of the movable device 25.

According to a particularly advantageous embodiment, the pin 29 is actually defined by a shaft (see Figure 4 in particular) which connects the movable devices 27 on opposite sides of the seat so as to fix them together (that is, to connect them kinematically) for a common and coordinated pivoting movement. This enables the movable devices 27 to be pivoted by the operation even of only one of the operating levers 32 which are provided on the top of each of these movable devices and project from the sides of the seat so that they can be gripped easily by the user.

In general, the finger formation 30 and the corresponding recess 31 achieve form coupling such that the second toothed sector 24 is raised (so that it can mesh with the first toothed sector 23 of the bracket 21) when the lever 32 is lowered.

On the other hand, when the lever 32 is raised (for example, as a result of a pulling action by the motorist), the finger formation 30 is lowered, thereby moving the movable device 25 so as to lower the second toothed sector 24 and hence separate it from the first toothed sector 23.

A spring 33 situated in front of the movable device 27 and acting between a fixed point 34 on the side 8 and a front arm 35 provided at the front of the pivoting device 27 in a general rocker-arm-like configuration automatically biasses the device 27 to the position which corresponds to the lowering of the lever 32, thus tending automatically to return the toothed sectors 23 and 24 to the position in which they are meshed.

This arrangement of the parts is intended to ensure that the backrest 6 is kept firmly in a fixed position relative to the backrest structure 1 in normal conditions of use (Figure 1 and Figure 5).

Conveniently, the movable, pivoting devices 25 are provided with tongues 36 which project outwardly and extend upwardly so as to embrace loosely the lower portions of the plates 21 (where the first toothed sectors 23 are situated) and which have the functions of lateral constraint and partial concealment of the operating members of the backrest 6.

Naturally, the principle of the invention remaining the same, the details of construction and forms of embodiment may be varied widely with respect to those described and illustrated, provided that they do not depart from the scope of the present invention as defined by the appended claims.

## Claims

1. A seat, particularly a rear seat for motor vehicles, comprising a squab (2) and a backrest (6), including a common support structure (7) for the squab (2) and the backrest (6) which (7) is intended to be mounted on the floor (P) of the passenger compartment of the motor vehicle so as to be movable selectively (10 to 14) backwards and forwards relative to the vehicle, characterised in that it includes guide means (10) for fixing to the floor (P) of the passenger compartment of the motor vehicle in a general forward-rearward direction relative to the passenger compartment, and in that the common support structure (7) includes parts (8) engaged for sliding in the guide means (10) with the interposition of locking means (11) which can be switched selectively (13) between an engaged position in which the common support structure (7) is kept in a fixed position relative to the guide means (10) and a disengaged position in which the common support structure (7) can slide along the guide means (10).

2. A seat according to Claim 1 characterised in that the squab (2) has a front region (4) which is hinged (15 to 17) to the common support structure (7) so that the squab (2) can be pivoted forwards selectively (Figure 2, Figure 3) relative to the common support structure.

3. A seat according to Claim 2, characterised in that the squab (2) is hinged (15 to 17) to the common support structure (7) and can pivot through an angle of approximately 180°.

4. A seat according to any one of the preceding claims, characterised in that hinge means (18 to 29) are interposed between the backrest (6) and the common support structure (7) for enabling the selective pivoting of the backrest (6) relative to the common support structure (7).

5. A seat according to Claim 4, characterised in that angular locking means (23 to 32) are interposed between the backrest (6) and the common support structure (7) and can be switched selectively (32) between an engaged position in which the backrest (6) is kept in a fixed position relative to the common support structure (7) and a disengaged position in which the backrest (6) is free to pivot relative to the support structure (7).

6. A seat according to Claim 4 or Claim 5, characterised in that the hinge means (18 to 32) enable the backrest (6) to pivot relative to the common support structure (7) through an angle of approximately 180°.

7. A seat according to Claim 5, characterised in that selectively engageable and disengageable toothed sector means (23, 24) of a given angular extent are associated with the backrest (6) and with the common support structure (7).

8. A seat according to Claim 7, characterised in that at least one plate (21) with a first toothed sector (23) at its lower end is fixed (22) to the backrest (6), in that at least one movable, pivoting device (25) also provided with a second toothed sector (24) of a shape complementary to that of the first toothed sector (23) of the at least one plate (21) is mounted on the common support structure (7), and in that operating means (27) are associated with the common support structure (7) for causing the movable, pivoting device (25) selectively to pivot between at least one first position in which the toothed sectors (23, 24) are engaged and at least one second position in which the toothed sectors (23, 24) are disengaged.

9. A seat according to Claim 8, characterised in that the pivoting device (25) has a notch (31), and in that at least one further pivoting device (27) is provided and has a finger formation (30) which can be inserted in the notch (31) so that the pivoting of the further pivoting device (27) causes the pivoting device (25) to pivot.

10. A seat according to Claim 5, characterised in that it includes resilient means (33) for biassing the angular locking means (23, 24) into their engaged position.

11. A seat according to Claim 9 and Claim 10, characterised in that the further pivoting device (27) has a general rocker-arm-like configuration with an arm (35) arranged in a position opposite the finger formation (30), and in that the resilient biassing means (33) act on the arm (35).

12. A seat according to Claim 9, characterised in that a hand lever (32) is associated with the further pivoting device (27) for pivoting the further pivoting device (27).

13. A seat according to Claim 9, characterised in that it includes two further pivoting devices (27) situated on opposite sides of the seat (1) and interconnected kinematically (29) for coordinated movement together.

14. A seat according to any one of the preceding claims, characterised in that the common support structure (7) has a generally rectangular structure with two sides (8) interconnected by cross members (9).

## Patentansprüche

1. Sitz, insbesondere Rücksitz für Kraftfahrzeuge, umfassend ein Sitzflächenteil (2) und eine Lehne (6) mit einer gemeinsamen Trägerstruktur (7) für das Sitzflächenteil (2) und die Lehne (6), wobei die Trägerstruktur (7) dazu bestimmt ist, an dem Boden (P) des Fahrgastraums des Kraftfahrzeugs derart angebracht zu werden, daß sie relativ zu dem Fahrzeug wahlweise (10 bis 14) rückwärts und vorwärts bewegbar ist, dadurch gekennzeichnet, daß er an dem Boden (P) des Fahrgastraums des Kraftfahrzeugs relativ zu dem Fahrgastraum in einer allgemeinen Vorwärts-Rückwärtsrichtung zu befestigende Führungsmittel (10) umfaßt und daß die gemeinsame Trägerstruktur (7) Teile (8) umfaßt, welche zum verschieben in die Führungsmittel (10) unter Zwischenanordnung von Verriegelungsmitteln (11) eingreifen, welche wahlweise (13) zwischen einer Eingriff-Stellung, in welcher die gemeinsame Trägerstruktur (7) relativ zu den Führungsmitteln (10) in einer festgelegten Stellung gehalten ist, und einer Außer-Eingriff-Stellung umschaltbar sind, in welcher die gemeinsame Trägerstruktur (7) entlang der Führungsmittel (10) verschiebbar ist.

2. Sitz nach Anspruch 1, dadurch gekennzeichnet, daß das Sitzflächenteil (2) einen an der gemeinsamen Trägerstruktur (7) derart angelenkten (15 bis 17) vorderen Bereich (4) aufweist, daß das Sitzflächenteil (2) relativ zu der gemeinsamen Trägerstruktur wahlweise (Figur 2, Figur 3) nach vorne verschwenkbar ist.

3. Sitz nach Anspruch 2, dadurch gekennzeichnet, daß das Sitzflächenteil (2) an der gemeinsamen Trägerstruktur (7) angelenkt ist (15 bis 17) und über einen Winkel von annähernd 180° verschwenkbar ist.

4. Sitz nach einem der vorhergehenden Ansprüche, dadurch gekennzeichnet, daß Gelenkmittel (18 bis 29) zwischen der Lehne (6) und der gemeinsamen Trägerstruktur (7) angeordnet sind, um das wahlweise Verschwenken der Lehne (6) relativ zu der gemeinsamen Trägerstruktur (7) zu ermöglichen.

5. Sitz nach Anspruch 4, dadurch gekennzeichnet, daß Winkelverriegelungsmittel (23 bis 32) zwischen der Lehne (6) und der gemeinsamen Trägerstruktur (7) angeordnet sind und wahlweise (32) zwischen einer Eingriff-Stellung, in welcher die Lehne (6) relativ zu der gemeinsamen Trägerstruktur (7) in einer festgelegten Stellung gehalten ist, und einer Außer-Eingriff-Stellung umschaltbar sind, in welcher die Lehne (6) relativ zu der Trägerstruktur (7) frei zu verschwenken ist.

6. Sitz nach Anspruch 4 oder Anspruch 5, dadurch gekennzeichnet, daß es die Gelenkmittel (18 bis 32) ermöglichen, daß die Lehne (6) relativ zu der gemeinsamen Trägerstruktur (7) über einen Winkel von annähernd 180° verschwenkbar ist.

7. Sitz nach Anspruch 5, dadurch gekennzeichnet, daß wahlweise in Eingriff und außer Eingriff bringbare gezahnte Sektor-Mittel (23, 24) gegebener Winkelerstreckung der Lehne (6) und der gemeinsamen Trägerstruktur (7) zugeordnet sind.

8. Sitz nach Anspruch 7, dadurch gekennzeichnet, daß wenigstens eine Platte (21) mit einem ersten gezahnten Sektor (23) an ihrem unteren Ende an der Lehne (6) befestigt ist (22), daß an der gemeinsamen Trägerstruktur (7) wenigstens eine bewegbare Schwenkvorrichtung (25) angebracht ist, welche ferner einen zweiten gezahnten Sektor (24) mit einer zum ersten gezahnten Sektor (23) der wenigstens einen Platte (21) komplementären Gestalt aufweist, und daß der gemeinsamen Trägerstruktur (7) Betätigungsmittel (27) zugeordnet sind, um zu bewirken, daß die bewegbare Schwenkvorrichtung (25) wahlweise zwischen wenigstens einer ersten Stellung, in welcher die gezahnten Sektoren (23, 24) in Eingriff sind, und wenigstens einer zweiten Stellung verschwenkt, in welcher die gezahnten Sektoren (23, 24) außer Eingriff sind.

9. Sitz nach Anspruch 8, dadurch gekennzeichnet, daß die Schwenkvorrichtung (25) eine Kerbe (31) aufweist und daß wenigstens eine weitere Schwenkvorrichtung (27) vorgesehen ist und ein Fingergebilde (30) aufweist, welches derart in die Kerbe (31) einführbar ist, daß das Verschwenken der weiteren Schwenkvorrichtung (27) das Verschwenken der Schwenkvorrichtung (25) bewirkt.

10. Sitz nach Anspruch 5, dadurch gekennzeichnet, daß er elastische Mittel (33) zum Vorspannen der Winkelverriegelungsmittel (23, 24) in ihre Eingriff-Stellung umfaßt.

11. Sitz nach Anspruch 9 und Anspruch 10, dadurch gekennzeichnet, daß die weitere Schwenkvorrichtung (27) eine allgemeine Kniehebelkonfiguration mit einem in einer Stellung entgegengesetzt zu dem Fingergebilde (30) angeordneten Arm (35) aufweist und daß die elastischen Vorspannmittel (33) auf den Arm (35) einwirken.

12. Sitz nach Anspruch 9, dadurch gekennzeichnet, daß der weiteren Schwenkvorrichtung (27) ein Handhebel (32) zum Verschwenken der weiteren Schwenkvorrichtung (27) zugeordnet ist.

13. Sitz nach Anspruch 9, dadurch gekennzeichnet, daß er zwei weitere sich an entgegengesetzten Seiten des Sitzes (1) befindende Schwenkvorrichtungen (27) umfaßt, welche für eine gemeinsame koordinierte Bewegung kinematisch miteinander verbunden (29) sind.

14. Sitz nach einem der vorhergehenden Ansprüche, dadurch gekennzeichnet, daß die gemeinsame Trägerstruktur (7) einen im allgemeinen rechteckigen Aufbau mit zwei durch Querelemente (9) verbundenen Seiten (8) aufweist.

## Revendications

1. Siège, notamment siège arrière pour véhicule à moteur, comprenant une assise (2) et un dossier (6), comportant une structure commune (7) de l'assise (2) et du dossier (6) qui (7) est destinée à être montée sur le plancher (P) du compartiment des passagers du véhicule à moteur afin qu'elle soit mobile sélectivement (10 à 14) vers l'avant et vers l'arrière par rapport au véhicule, caractérisé en ce qu'il comprend un dispositif de guidage (10) destiné à le fixer au plancher (P) du compartiment des passagers du véhicule à moteur dans une direction générale avant-arrière par rapport au compartiment des passagers, et en ce que la structure commune (7) de support comporte des parties (8) qui coopèrent par coulissement avec le dispositif de guidage (10) avec interposition d'un dispositif de blocage (11) qui peut être commuté sélectivement (13) entre une position de coopération dans laquelle la structure commune (7) de support est maintenue en position fixe par rapport au dispositif de guidage (10) et une position dégagée dans laquelle la structure commune (7) de support peut coulisser le long du dispositif de guidage (10).

2. Siège selon la revendication 1, caractérisé en ce que l'assise (2) a une région avant (4) qui est articulée (15 à 17) sur la structure commune (7) de support afin que l'assise (2) puisse pivoter sélectivement vers l'avant (figure 2, figure 3) par rapport à la structure commune de support.

3. Siège selon la revendication 2, caractérisé en ce que l'assise (2) est articulée (15 à 17) sur la structure commune (7) de support et peut pivoter d'un angle approximativement égal à 180°.

4. Siège selon l'une quelconque des revendications précédentes, caractérisé en ce qu'un dispositif d'articulation (18 à 29) est placé entre le dossier (6) et la structure commune (7) de support afin qu'il permette le pivotement sélectif du dossier (6) par rapport à la structure commune (7) de support.

5. Siège selon la revendication 4, caractérisé en ce qu'un dispositif angulaire (23 à 32) de blocage est disposé entre le dossier (6) et la structure commune (7) de support et peut être commuté sélectivement (32) entre une position de coopération dans laquelle le dossier (6) est maintenu en position fixe par rapport à la structure commune (7) de support et une position dégagée dans laquelle le dossier (6) est libre de pivoter par rapport à la structure de support (7).

6. Siège selon la revendication 4 ou la revendication 5, caractérisé en ce que le dispositif d'articulation (18 à 32) permet le pivotement du dossier (6) par rapport à la structure commune (7) de support d'un angle d'environ 180°.

7. Siège selon la revendication 5, caractérisé en ce que des dispositifs (23, 24) à secteur denté qui peuvent coopérer et se séparer sélectivement, ayant une étendue angulaire déterminée, sont associés au dossier (6) et à la structure commune (7) de support.

8. Siège selon la revendication 7, caractérisé en ce qu'une plaque au moins (21) ayant un premier secteur denté (23) à son extrémité inférieure est fixée (22) au dossier (6), en ce qu'au moins un organe mobile pivotant (25) qui est aussi muni d'un second secteur denté (24) de forme complémentaire de celle du premier secteur denté (23) de la plaque au moins (21) est monté sur la structure commune (7) de support, et en ce qu'un dispositif de manoeuvre (27) est associé à la structure commune (7) de support de manière que l'organe mobile pivotant (25) puisse pivoter sélectivement entre au moins une première position dans laquelle les secteurs dentés (23, 24) sont en prise et au moins une seconde position dans laquelle les secteurs dentés (23, 24) sont dégagés.

9. Siège selon la revendication 8, caractérisé en ce que l'organe pivotant (25) a une encoche (31), et un organe pivotant supplémentaire au moins (27) est présent et possède un doigt (30) qui peut pénétrer dans l'encoche (31) afin que le pivotement de l'organe pivotant supplémentaire (27) provoque un pivotement de l'organe pivotant (25).

10. Siège selon la revendication 5, caractérisé en ce qu'il comprend un dispositif élastique (33) de rappel des dispositifs angulaires (23, 24) de blocage dans leur position de coopération.

11. Siège selon la revendication 9 et la revendication 10, caractérisé en ce que l'organe pivotant supplémentaire (27) a une configuration générale de culbuteur comprenant un bras (35) occupant une position en face du doigt (30), et le dispositif élastique de rappel (33) agit sur le bras (35).

12. Siège selon la revendication 9, caractérisé en ce qu'un levier manuel (32) est associé à l'organe pivotant supplémentaire (27) afin qu'il fasse pivoter cet organe pivotant supplémentaire (27).

13. Siège selon la revendication 9, caractérisé en ce qu'il comprend deux organes pivotants supplémentaires (27) placés de part et d'autre du siège (1) et interconnectés cinématiquement (29) afin qu'ils présentent un mouvement coordonné.

14. Siège selon l'une quelconque des revendications précédentes, caractérisé en ce que la structure commune (7) de support a une structure générale rectangulaire ayant deux côtés (8) interconnectés par des traverses (9).
